# EUROPÄISCHE PATENTSCHRIFT

(11) **EP 1 121 544 B1**
(45) Veröffentlichungstag und Bekanntmachung des Hinweises auf die Patenterteilung: **29.01.2003**
(21) Anmeldenummer: 99953780.6
(22) Anmeldetag: 12.10.1999
(51) Int. Cl.: F16F 9/36

(54) **KOLBEN FÜR EINE KOLBEN-ZYLINDER-ANORDNUNG, INSBESONDERE STOSSDÄMPFERKOLBEN**
PISTON FOR A PISTON-CYLINDER ARRANGEMENT, ESPECIALLY SHOCK ABSORBER PISTON
PISTON POUR ENSEMBLE PISTON-CYLINDRE, EN PARTICULIER PISTON AMORTISSEUR

(30) Priorität: 14.10.1998 DE 19847341
(43) Veröffentlichungstag der Anmeldung: 08.08.2001
(73) Patentinhaber: GKN Sinter Metals GmbH, 42477 Radevormwald (DE)
(72) Erfinder: CASELLAS, Antonio, D-53721 Siegburg (DE); MAY, Ewald, D-53175 Bonn (DE)
(74) Vertreter: Maxton, Alfred, Dipl.-Ing.
(86) Internationale Anmeldenummer: EP9907642
(87) Internationale Veröffentlichungsnummer: WO00022319

(56) Entgegenhaltungen:
- EP-A- 0 345 561
- DE-A- 3 429 474
- DE-A- 3 812 574
- DE-A- 4 421 968
- DE-C- 19 707 633
- DE-U- 29 623 140

## Beschreibung

Aus EP-A-0 658 611 ist ein Stoßdämpferkolben bekannt, der einen Kolbenkörper aufweist, der auf seiner Umfangsfläche mit einem umlaufenden Steg versehen ist, an den sich eine Vielzahl von in Achsrichtung verlaufenden Stegen auf einer Seite des umlaufenden Stegs anschließt. Auf diesen Kolbenkörper ist im Spritzgießverfahren eine Dichtung aus thermoplastischem Kunststoff aufgespritzt, wobei insbesondere die sich in axialer Richtung erstreckenden Stege mit ihren dazwischen liegenden voll mit Dichtungswerkstoff ausgefüllten Nuten der zuverlässigen Verankerung des Dichtungswerkstoffs dienen. Die im Spritzguß aufgebrachte Dichtung ermöglicht eine enge Tolerierung, um das sogenannte "blow-by" zu vermeiden und so eine zuverlässige Abdichtung der einander zugeordneten Zylinderräume zu bewirken. Das Verfahren zur Herstellung derartiger spritzgegossener Dichtungen ist verhältnismäßig aufwendig.

Aus US-A-3 212 411 ist eine Kolben-Zylinder-Anordnung bekannt, deren Kolbenkörper auf seiner Umfangsfläche eine Vielzahl von umlaufenden Rillen aufweist. Zum Aufbringen der Dichtung ist ein napfförmiger Vorformling aus PTFE (Polytetrafluorethylen) vorgesehen, der zunächst auf den Kolbenkörper lose aufgesetzt wird. Der so vorbereitete Kolbenkörper wird anschließend zunächst in einen hoch aufgeheizten Formund Kalibrierzylinder eingedrückt, wobei unter Wärmeeinfluß das PTFE-Material in die Rillen auf der Umfangsfläche des Kolbenkörpers eingepreßt wird. Anschließend wird der Kolbenkörper mit der aufgepreßten Dichtung in einem entsprechend ausgebildeten Kühlzylinder abgekühlt. Die Rillen sind vollständig mit dem Dichtungswerkstoff ausgefüllt, um so eine formschlüssig-feste Verbindung der Dichtung mit der Umfangsfläche des Kolbenkörpers zu bewirken. Für den Einsatz als Stoßdämpferkolben muß anschließend noch die die Stirnfläche des Kolbenkörpers auf einer Seite überdeckende Bodenfläche des Vorformling entfernt werden.

Aus EP-A-682 190 ist ein Stoßdämpferkolben bekannt, der sich in seiner Herstellung von dem vorstehend beschriebenen Verfahren im wesentlichen nur dadurch unterscheidet, daß zum Aufbringen der Dichtung statt eines napfförmigen Vorformlings eine gestanzte Kreisringscheibe eingesetzt wird. Diese Kreisringscheibe wird auf ein Ende des Kolbenkörpers aufgesetzt. Der so vorbereitete Kolbenkörper wird wiederum in einen aufgeheizten Form- und Kalibrierzylinder eingepreßt, wobei die Kreisringscheibe als Band auf die Umfangsfläche des Kolbenkörpers umgelegt und anschließend in die in Umfangsrichtung des Kolbenkörpers verlaufenden Rillen unter Wärmeeinfluß eingepreßt wird. Anschließend wird der mit seiner aufgepreßten Dichtung versehene Kolben durch ein Kühlrohr geführt. Der Dichtungswerkstoff füllt auch hierbei die Rillen praktisch vollständig aus, so daß die Dichtung formschlüssig-fest mit der Umfangsfläche des Kolbenkörpers verbunden ist.

Die beiden vorstehend beschriebenen Verfahren weisen den Nachteil auf, daß für das Umformen und das Einpressen des Dichtungsmaterials in die Rillen auf der Umfangsfläche des Kolbenkörpers erhebliche Preßdrücke erforderlich sind und das die Dichtung bildende Kunststoffmaterial starken Umformungen unterworfen wird, die nachteilig die Struktur des Dichtungswerkstoffs beeinflußt.

DE 44 21 968 A1 schließlich offenbart einen Dämpfungskolben für einen Schwingungsdämpfer, wobei der Dämpfungskolben an einer Kolbenstange befestigt ist und einen eine Dämpfungsflüssigkeit enthaltenden Dämpfungszylinder in zwei Arbeitsräume unterteilt und zwischen seiner Außenmantelfläche und der umgebenden Zylinderinnenfläche eine ringförmige Dichtung in Form einer Kunststoffschicht aufweist, welche in der Nähe des oberen und unteren Kolbenendes Dichtlippen beinhaltet.

Der Erfindung liegt die Aufgabe zugrunde, einen Kolben, insbesondere Stoßdämpferkolben zu schaffen, bei dem die vorstehend beschriebenen Nachteile vermieden sind.

Diese Aufgabe wird gemäß der Erfindung gelöst durch einen Kolben für eine Kolben-Zylinder-Anordnung, insbesondere Stoßdämpferkolben, mit einem Kolbenkörper, der auf seiner Umfangsfläche mit wenigstens einem umlaufenden Steg versehen ist, bei dem ferner auf die Umfangsfläche des Kolbenkörpers eine manschettenförmige Dichtung aus einem warm verformbaren Kunststoffmaterial so aufgeformt ist, daß der Steg nur über einen Teil seiner Höhe in das Material der Dichtung eingeformt sind. Überraschenderweise hat sich herausgestellt, daß es für eine einwandfreie und zuverlässige Verbindung zwischen Dichtung und Kolbenkörper nicht erforderlich ist, eine Vielzahl von Rillen auf der Umfangsfläche des Kolbenkörpers an-zuordnen. Es genügt hierbei wenigstens ein umlaufender Steg, auf den die manschettenförmige Dichtung in der in EP-A-682 190 beschriebenen Weise aufgeformt wird. Überraschend hat sich hierbei ferner herausgestellt, daß es genügt, wenn der Steg nur über einen Teil seiner Höhe in das Material der Dichtung eingeformt wird. Einerseits ergibt sich hierbei ein einwandfreier Formschluß zwischen der manschettenförmigen Dichtung und dem Kolbenkörper und zum anderen nur eine mäßige Umformung des Kunststoffmaterials, so daß nicht nur geringere Preßkräfte aufzubringen sind, sondern auch in wesentlich geringerem Maße ein Materialfluß bei der Umformung erfolgt und damit eine nachteilige Beeinflussung der Materialstruktur praktisch vermieden wird. Der Steg ist dann zweckmäßigerweise in der Nähe einer Stirnfläche des Kolbenkörpers, vorzugsweise der höher belasteten Stirnfläche, angeordnet.

Bei höheren Beanspruchungen im Betrieb ist in zweckmäßiger Ausgestaltung der Erfindung vorgesehen, daß wenigstens zwei umlaufende Stege auf der Umfangsfläche angeordnet sind, die eine Nut begrenzen. Hierdurch ergibt sich auch bei höheren Arbeitsdrücken eine zuverlässige formschlüssige Verbindung. Die Anordnung von einem, aber auch von zwei umlaufenden Stegen läßt sich spanabhebend noch kostengünstig herstellen.

In vorteilhafter weiterer Ausgestaltung der Erfindung ist vorgesehen, daß die manschettenförmige Dichtung jeweils mit ihren Rändern die zugeordneten Stirnflächen des Kolbenkörpers überragt. Da die manschettenförmige Dichtung nach dem bekannten Verfahren aus einer Kreisringscheibe hergestellt wird, kann das in EP-A-0 682 190 beschriebene Phänomen der "Rückerinnerung" des Kunststoffmaterials dazu genutzt werden, daß der den Innendurchmesser der Kreisringscheibe begrenzende Rand nach dem Aufbringen auf den Kolbenkörper sich nach innen zusammenzieht und der vom äußeren Rand der Kreisringscheibe herrührende Rand der manschettenförmigen Dichtung sich nach außen zurückstellt und hierbei nach Art einer Dichtlippe die übrige Umfangsfläche der manschettenförmigen Dichtung überragt. Wird der Kolbenkörper so eingebaut, daß die mit dem lippenförmig nach außen weisenden Rand versehene Kolbenfläche bei der Verwendung als Stoßdämpferkolben der Druckseite, also der mit hoher Last beaufschlagten Seite, zugekehrt ist und die Kolbenfläche mit dem nach innen zurückspringenden Rand auf der sogenannten Zugseite angeordnet ist, dann ergibt sich eine verbesserte Abdichtung des Kolbens im Stoßdämpferzylinder bei der Druckbelastung, da die Hydraulikflüssigkeit im lippenförmigen Rand an die Zylinderwandung anpreßt. Beim Zurückfedern, also bei Zuglast, kann dann infolge des geringen Spiels zwischen Kolbenwandung und Zylinderwandung in geringem Maße die Hydraulikflüssigkeit in diesen Zwischenraum eintreten und hierbei für eine Schmierung bis hin zur Anlagekante des lippenförmig an der Zylinderwandung anliegenden Randes der manschettenförmigen Dichtung gelangen und so hier für eine einwandfreie Schmierung und damit eine Verminderung des Verschleißes der Dichtung sorgen. Da der Strömungswiderstand durch diesen geringen Spielspalt zwischen der Dichtungsfläche des Kolbens und der Zylinderwandung um ein erhebliches höher ist als der Durchflußwiderstand durch die überströmenden Kanäle im Kolbenkörper, ergibt sich praktisch keine Leistungsminderung.

In besonders vorteilhafter Ausgestaltung der Erfindung ist vorgesehen, daß wenigstens ein Steg in einem an eine Stirnfläche des Kolbenkörpers angrenzenden Bereich angeordnet sind. Insbesondere bei dieser Geometrie sind dann zweckmäßigerweise nur zwei Stege vorgesehen, die dann nur eine Nut im dazwischen liegenden Bereich der Umfangsfläche des Kolbenkörpers begrenzen. Die Stege können verhältnismäßig breit bemessen sein, wobei die von den Stegen seitlich begrenzte Nut dann zwei bis drei mal so breit sein kann wie eine Stegbreite. Hierdurch wird die Kontur der Umfangsfläche des Kolbenkörpers in der Formgebung erheblich vereinfacht.

In besonders vorteilhafter Ausgestaltung der Erfindung ist vorgesehen, daß der Kolbenkörper aus wenigstens zwei Teilelementen zusammengefügt ist und eine jeweils senkrecht zur Kolbenachse verlaufende Teilungsebene aufweist. Ein derartiger Aufbau eines Kolbenkörpers ist insbesondere für die Herstellung des Kolbenkörpers im pulvermetallurgischen Verfahren, d. h. als Sintermetallkörper geeignet. Die Formgebung der beiden Teilelemente ist insbesondere dann günstig, wenn jedes Teilelement nur einen umlaufenden Steg aufweist, so daß die spiegelbildlich zusammengefügten Teilelemente mit ihren Stegen eine entsprechende Nut begrenzen. Dies erlaubt auch die kostengünstige Herstellung einer hinterschnittenen Nut, da eine spanende Bearbeitung entfällt.

Die Erfindung wird anhand schematischer Zeichnungen eines Ausführungsbeispiels näher erläutert. Es zeigen:
- Fig. 1: einen Teilschnitt in Achsrichtung durch eine Kolben-Zylinder-Anordnung für einen Stoßdämpfer,
- Fig. 2: einen vergrößerten Teilschnitt durch den Kolben der Anordnung gemäß Fig. 1,
- Fig. 3: einen vergrößerten Teilschnitt durch einen Kolben mit einem Steg.

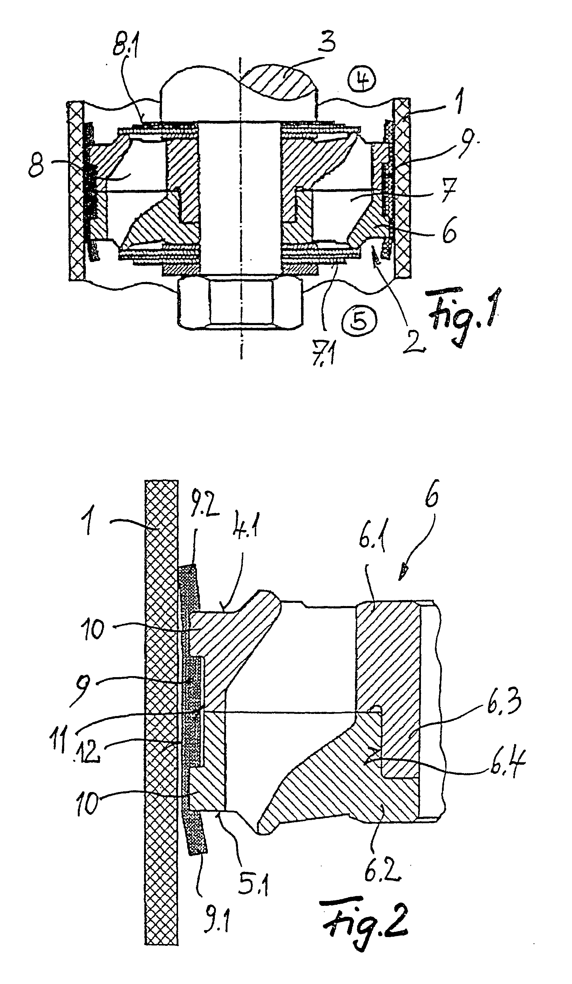

Fig. 1 zeigt einen axialen Schnitt durch einen Stoßdämpfer, der zwei relativ zueinander bewegbare Teile, beispielsweise eine Fahrzeugachse und einen Fahrzeugrahmen miteinander verbindet. Der Stoßdämpfer weist einen Zylinderteil 1 auf, der mit einem der beiden relativ zueinander bewegbaren Teile verbunden ist. Im Zylinder 1 ist ein Kolben 2 geführt, der an einer Kolbenstange 3 befestigt ist, die mit ihrem freien Ende am anderen Teil der beiden relativ zueinander bewegbaren Teile festgelegt ist. Der Zylinder 1 ist hierbei beidseitig geschlossen und mit einer Hydraulikflüssigkeit gefüllt, so daß die Kolben-Zylinder-Anordnung doppelt wirkend ausgelegt ist, wobei der Kolben zwei Zylinderräume 4, 5 voreinander trennt.,

Der Kolbenkörper 6 des Kolbens 2 weist mehrere nebeneinander verlaufende Durchtrittskanäle 7, 8 auf. Die Durchtrittskanäle 7, 8 sind jeweils auf ihrer in der Funktion noch zu erläuternden Austrittsseite mit einem Drosselventil 7.1 bzw. 8.1 abgedeckt. Die Anordnung ist hierbei so getroffen, daß beispielsweise drei Durchtrittskanäle 7 und drei Durchtrittskanäle 8 sternförmig alternierend um die Zylinderachse angeordnet vorgesehen sind.

Die Umfangsfläche des Kolbens 2 ist mit einer manschettenförmigen Dichtung 9 versehen, die für eine Abdichtung des Zylinderraums 4 gegenüber dem Zylinderraum 5 sorgt. Bei einer Bewegung des Kolbens 2 in den Zylinderraum 4 hinein, wird die Flüssigkeit durch die Durchtrittskanäle 7 gegen die Rückstellkraft der Drosselventile 7.1 gepreßt. Die Durchtrittsöffnungen 8 werden hierbei durch den auf die Drosselventile 8.1 lastenden Druck des Flüssigkeitsraums 4 verschlossen gehalten. Bei einer Bewegung in umgekehrter Richtung werden die Durchtrittskanäle 7 durch die Drosselventile 7.1 geschlossen, während die Flüssigkeit durch die durchströmenden Kanäle 8 aus dem Zylinderraum 5 in den Zylinderraum 4 zurückströmen kann.

In Fig. 2 ist ohne die Anordnung der Drosselventile 7.1 und 8.1 im Teilschnitt ein Kolben 2 in vergrößerter Darstellung wiedergegeben. Der Kolbenkörper 6 ist auf seiner Umfangsfläche mit zwei Stegen 10 versehen, die bei dem hier dargestellten Ausführungsbeispiel so angeordnet sind, daß sie jeweils auch einen Teil der Stirnfläche 4.1 bzw. 5.1 des Kolbenkörpers 6 beinhalten. Die beiden Stege 10 begrenzen auf der Umfangsfläche des Kolbenkörpers 6 eine Nut 11. Die Anordnung kann auch so getroffen werden, daß wenigstens einer der Stege 10 gegenüber seiner zugehörigen Stirnfläche 4.1 und/oder 5.1 etwas zurückversetzt ist.

Die auf der Umfangsfläche des Kolbenkörpers 6 angeordnete manschettenförmige Dichtung 9 besteht aus einem warm verformbaren Kunststoff, vorzugsweise aus PTFE. Die manschettenförmige Dichtung 9 ist bei dem hier dargestellten Ausführungsbeispiel durch Warmumformung aus einer Kreisringscheibe auf die Umfangsfläche des Kolbenkörpers 6 aufgeformt worden, wobei der Rand 9.1 der Dichtung 9 durch den Innenrand der Kreisringscheibe gebildet wird, während der Rand 9.2 durch den Außenrand der Kreisringscheibe gebildet wird. Die Kreisringscheibe war in ihrer Ringbreite so bemessen, daß sie breiter war als die Dicke des Kolbenkörpers 6 in axialer Erstreckung, so daß nach dem Umformen der vom Innenrand der Kreisringscheibe herrührende Rand 9.1 nach innen eingezogen ist, während der vom Außenrand der Kreisringscheibe herrührende Rand 9.2 nach außen abgebogen ist und in der Funktion eine Dichtlippe bildet.

Bei der Warmumformung der Kreisringscheibe sind die Stege 10 nur über einen Teil ihrer Höhe in das Material der manschettenförmigen Dichtung 9 eingeformt, so daß zwischen dem Material der Dichtung 9 und dem Boden der Nut 11 noch ein gewisser Freiraum verbleibt, so daß beim Formen der Dichtung 9 das Dichtungsmaterial frei und ohne Zwängung in die Nut 11 einfließen kann. Bei diesem Umformungsvorgang wird die zylindrische Außenfläche 12 der Dichtung 9 gleichzeitig kalibriert, so daß die gewünschten Toleranzen zum Innendurchmesser des Zylinders 1 eingehalten werden können. Da insbesondere bei der Verwendung einer derartigen Kolben-Zylinder-Anordnung als Stoßdämpfer im Betrieb eine Erwärmung des Gesamtsystems auftritt, erlaubt dieser verbleibende Freiraum im Nutgrund innerhalb gewisser Grenzen auch eine Ausdehnung des Dichtungsmaterials in die Nut hinein, so daß der Verschleiß der Dichtung auf der an die Ränder angrenzenden zylindrischen Umfangsfläche der Dichtung 9 herabgesetzt wird.

Wie Fig. 1 und Fig. 2 erkennen lassen, ist der Kolbenkörper 6 aus zwei Teilelementen 6.1 und 6.2 hergestellt. Der Verlauf der Konturen der Durchtrittskanäle 7 und 8 jeweils in dem einen und in dem anderen Teil ist bei dem dargestellten Ausführungsbeispiel identisch, so daß abgesehen von der Anordnung einer Buchse 6.3 am Teilelement 6.1 und einer entsprechend zugeordneten Ausnehmung 6.4 am Teilelement 6.2 beide Teilelemente in ihrer äußeren Formgebung identisch und ohne den Preßvorgang hindernde Hinterschneidungen ausgebildet sind. Damit besteht die Möglichkeit, einen derartigen Kolbenkörper 6 aus zwei pulvermetallurgisch hergestellten Teilelementen zu bilden, die als Teilelemente aus einem sintermetallurgischen Pulver gepreßt werden können. Die gepreßten Teilelemente werden dann in einer Fügeoperation entsprechend zusammengefügt und anschließend gesintert. Gerade diese Form der Herstellung erlaubt es aber, die Teilelemente so herzustellen, daß die Durchtrittskanäle unter Berücksichtigung der unterschiedlichen Durchströmungsbedingungen bei Zug- und Druckbelastungen unterschiedlich geformt sein können.

Je nach dem Herstellungsverfahren ist es auch möglich, mehr als zwei Stege vorzusehen, so daß jeweils zwei benachbarte Stege eine Nut begrenzen und dementsprechend auch eine höhere Anzahl von Nuten vorhanden ist.

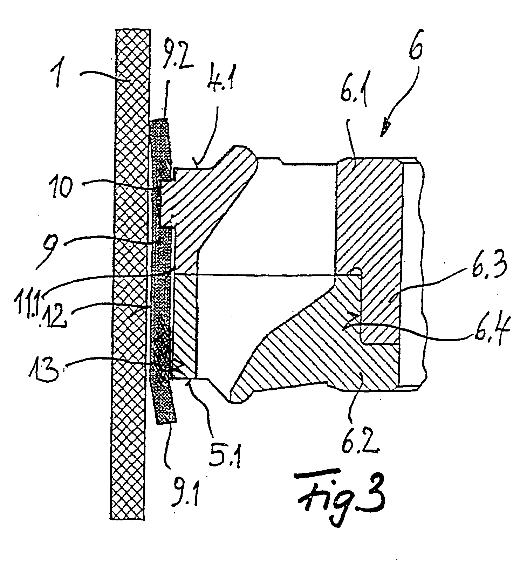

In Fig. 3 ist eine gegenüber Fig. 2 abgewandelte Ausführungsform dargestellt. Gleiche Bezugszeichen betreff gleiche Elemente, so daß insoweit auf die Beschreibung zu Fig. 2 verwiesen werden kann.

Die in Fig. 3 dargestellte Ausführungsform ist für Einsatzfälle mit geringerer Zug-Druck-Belastung vorgesehen, so daß der Kolbenkörper 6 mit nur einem umlaufenden Steg 10 versehen ist. Im Einsatzfall ist die Stirnfläche 4.1 des Kolbenkörpers 6 mit dem höheren Druck beaufschlagt, so daß der Steg 10 hier nahe dieser Stirnfläche angeordnet ist.

Die manschettenförmige Dichtung 9 ist in der vorbeschriebenen Weise auf den Kolbenkörper 6 aufgeformt, wobei auch hier wiederum der umlaufende Steg 10 nur über einen Teil seiner Höhe in das Material der manschettenförmigen Dichtung 9 eingeformt ist.

Aufgrund des vorbeschriebenen "Rückerinnerungsvermögens" des Kunststoffmaterials, legt sich dieses zwangsläufig im Übergangsbereich 13 zur Stirnfläche 5.1 an den Kolbenkörper 6 an, wobei zumindest in dem dem Steg 10 naheliegenden Bereich ein Frei- oder Hohlraum 11.1 verbleibt, so daß auch hier wieder die Möglichkeit gegeben ist, daß sich das Material der manschettenförmigen Dichtung 9 unter Temperatureinfluß in diesen Freiraum 11.1 ausdehnen kann.

Wenn auch die vorstehend beschriebene pulvermetallurgische Herstellung des Kolbenkörpers besonders günstig ist, so läßt sich die erfindungsgemäße Ausgestaltung mit nur einem oder zwei eine Nut begrenzenden Stegen noch mit vertretbarem Aufwand auch spanabhebend herstellen.

## Patentansprüche

1. Kolben für eine Kolben-Zylinder-Anordnung, insbesondere Stoßdämpferkolben, mit einem Kolbenkörper (6), der auf seiner Umlauffläche mit wenigstens einem umlaufenden Steg (10) versehen ist, **dadurch gekennzeichnet, daß** auf die Umfangsfläche des Kolbenkörpers (6) eine manschettenförmige Dichtung (9) aus einem warm verformbaren Kunststoffmaterial so aufgeformt ist, daß der Steg (10) nur über einen Teil seiner Höhe in das Material der manschettenförmigen Dichtung (9) eingeformt ist.

2. Kolben nach Anspruch 1, **dadurch gekennzeichnet, daß** wenigstens zwei umlaufende Stege (10) auf der Umfangsfläche angeordnet sind, die eine Nut (11) begrenzen.

3. Kolben nach Anspruch 1 oder 2, **dadurch gekennzeichnet, daß** die manschettenförmige Dichtung (9) jeweils mit ihren Rändern (9.1, 9.2) die zugeordneten Stirnflächen (4.1, 5.1) des Kolbenkörpers (6) überragt.

4. Kolben nach einem der Ansprüche 1 bis 3 , **dadurch gekennzeichnet, daß** wenigstens ein Steg (10) in einem eine Stirnfläche (4.1, 5.1) des Kolbenkörpers (6) angrenzenden Bereich angeordnet sind.

5. Kolben nach einem der Ansprüche 1 bis 4, **dadurch gekennzeichnet, daß** der Kolbenkörper (6) aus wenigstens zwei Teilelementen (6.1, 6.2) zusammengefügt ist und eine jeweils senkrecht zur Kolbenachse verlaufende Teilungsebene aufweist.

6. Kolben nach einem der Ansprüche 1 bis 5, **dadurch gekennzeichnet, daß** jedes Teilelement (6.1, 6.2) des Kolbenkörpers (6) einen umlaufenden Steg (10) aufweist.

7. Kolben nach einem der Ansprüche 1 bis 6, **dadurch gekennzeichnet, daß** der Kolbenkörper (6) pulvermetallurgisch hergestellt ist.

8. Kolben nach einem der Ansprüche 1 bis 7, **dadurch gekennzeichnet, daß** die manschettenförmige Dichtung (9) aus PTFE als wärmeverformbarem Kunststoff besteht.

9. Kolben nach einem der Ansprüche 1 bis 8, **dadurch gekennzeichnet, daß** die manschettenförmige Dichtung (9) zumindest in ihrem die Stege (10) überdeckenden Bereich unter Kalibrierung ihrer Außenfläche (12) aufgepreßt ist.

## Claims

1. Piston for a piston-cylinder arrangement, in particular shock absorber piston, with a piston body (6) which is provided with at least one circulating web (10) on its peripheral area, **characterised in that** a collar-shaped seal (9) of a thermoforming plastics material is formed onto the peripheral area of the piston body (6) such that the web (10) is formed into the material of the collar-shaped seal (9) over only a part of its height.

2. Piston according to Claim 1, **characterised in that** at least two circulating webs (10) are arranged on the peripheral area, which webs define a groove (11).

3. Piston according to Claim 1 or 2, **characterised in that** each of the edges (9.1, 9.2) of the collar-shaped seal (9) protrude beyond the associated end faces (4.1, 5.1) of the piston body (6).

4. Piston according to any one of Claims 1 to 3, **characterised in that** at least one web (10) is arranged in a region which is adjacent to an end face (4.1, 5.1) of the piston body (6).

5. Piston according to any one of Claims 1 to 4, **characterised in that** the piston body (6) is assembled from at least two sub-elements (6.1, 6.2) and has a plane of division in each case extending perpendicularly to the piston axis.

6. Piston according to any one of Claims 1 to 5, **characterised in that** each sub-element (6.1, 6.2) of the piston body (6) has a circulating web (10).

7. Piston according to any one of Claims 1 to 6, **characterised in that** the piston body (6) is manufactured by powder metallurgy.

8. Piston according to any one of Claims 1 to 7, **characterised in that** the collar-shaped seal (9) consists of PTFE as thermoforming plastics material.

9. Piston according to any one of Claims 1 to 8, **characterised in that** the collar-shaped seal (9) is pressed on, while calibrating its exterior surface (12), at least in its region which overlaps the webs (10).

## Revendications

1. Piston pour ensemble piston-cylindre, en particulier piston d'amortisseur, comprenant un corps de piston (6) qui est pourvu d'au moins une nervure périphérique (10) sur sa surface circonférentielle, **caractérisé en ce que**, sur la surface circonférentielle du corps de piston (6), un joint d'étanchéité (9) en forme de manchette est formé à partir d'une matière plastique déformable à chaud de telle façon que la nervure (10) n'est encapsulée dans la matière du joint d'étanchéité (9) en forme de manchette que sur une partie de sa hauteur.

2. Piston selon la revendication 1, **caractérisé en ce qu'**au moins deux nervures périphériques (10) sont disposées sur la surface circonférentielle, qui délimitent une rainure (11).

3. Piston selon la revendication 1 ou 2, **caractérisé en ce que** le joint d'étanchéité (9) en forme de manchette saillit avec ses bords respectifs (9,1, 9,2) des surfaces frontales (4,1, 5,2) associées du corps de piston (6).

4. Piston selon une des revendications 1 à 3, **caractérisé en ce qu'**au moins une nervure (10) est disposée dans une zone adjacente à une surface frontale (4,1, 5,1) du corps de piston (6).

5. Piston selon une des revendications 1 à 4, **caractérisé en ce que** le corps de piston (6) est assemblé à partir d'au moins deux éléments partiels (6,1, 6,2) et présente un plan de joint s'étendant respectivement perpendiculairement à l'axe de piston.

6. Piston selon une des revendications 1 à 5, **caractérisé en ce que** chaque élément partiel (6,1, 6,2) du corps de piston (6) présente une nervure périphérique (10).

7. Piston selon une des revendications 1 à 6, **caractérisé en ce que** le corps de piston (6) est réalisé par métallurgie des poudres.

8. Piston selon une des revendications 1 à 7, **caractérisé en ce que** le joint d'étanchéité (9) en forme de manchette est réalisé en PTFE en tant que plastique déformable à chaud.

9. Piston selon une des revendications 1 à 8, **caractérisé en ce que** le joint d'étanchéité (9) en forme de manchette est emmanché à force, du moins dans sa zone recouvrant les nervures (10), en calibrant sa surface extérieure (12).
